(19) Europäisches Patentamt
European Patent Office
Office européen des brevets

(11) EP 2 253 077 B1

(12) EUROPEAN PATENT SPECIFICATION

(45) Date of publication and mention of the grant of the patent:
26.07.2017 Bulletin 2017/30

(51) Int Cl.:
H04B 7/04 (2017.01)   H04B 7/26 (2006.01)
H04B 7/06 (2006.01)   H04B 7/08 (2006.01)
G01S 3/42 (2006.01)   H01Q 3/26 (2006.01)

(21) Application number: 09719218.1

(22) Date of filing: 11.03.2009

(86) International application number:
PCT/US2009/036837

(87) International publication number:
WO 2009/114629 (17.09.2009 Gazette 2009/38)

(54) **MMWAVE WPAN COMMUNICATION SYSTEM WITH FAST ADAPTIVE BEAM TRACKING**

MMWELLEN-WPAN-KOMMUNIKATIONSSYSTEM MIT SCHNELLER ADAPTIVER STRAHLVERFOLGUNG

SYSTÈME DE COMMUNICATION DE WPAN ÉMETTANT DES ONDES MILLIMÉTRIQUES AVEC SUIVI DE FAISCEAU ADAPTATIF ET RAPIDE

(84) Designated Contracting States:
AT BE BG CH CY CZ DE DK EE ES FI FR GB GR HR HU IE IS IT LI LT LU LV MC MK MT NL NO PL PT RO SE SI SK TR

(30) Priority: 11.03.2008  US 35480 P
12.08.2008  US 190307

(43) Date of publication of application:
24.11.2010  Bulletin 2010/47

(73) Proprietor: Intel Corporation
Santa Clara, CA 95054 (US)

(72) Inventors:
• NIU, Huaning
Milpitas
CA 95035 (US)
• LI, Qinghua
Sunnyvale
CA 94087 (US)

(74) Representative: HGF Limited
Fountain Precinct
Balm Green
Sheffield S1 2JA (GB)

(56) References cited:
WO-A1-01/17131        WO-A2-2006/069271
KR-B1- 100 135 592    US-A- 4 189 733
US-A1- 2007 207 730

• N/A: "Unified And Flexible Millimeter Wave Wpan Systems Supported By Common Mode ; 15-07-0761-15-003c-unified-and-flexible-millimeterwave-wpan-systems-supported-by-common-mode", IEEE DRAFT; 15-07-0761-15-003C-UNIFIED-AND-FLEXIBLE-MILLIMETER-WAVE-WPAN-SYSTEMS-SUPPORTED-BY-CO MMON-MODE, IEEE-SA MENTOR, PISCATAWAY, NJ USA, vol. 802.153c, no. 15, 13 November 2007 (2007-11-13), pages 1-80, XP017668784, [retrieved on 2007-11-13]

EP 2 253 077 B1

**Description**

**BACKGROUND**

**Description of the Related Art**

Millimeter- wave (mm Wave) wireless personal area network (WPAN) communication systems operating in the 60 Gigahertz (GHz) frequency band are expected to provide several Gigabits per second (Gbps) throughput to distances of about ten meters and will be entering into service in a few years. Currently several standardization bodies (IEEE 802.15.3c, WirelessHD SIG, ECMA TG20, COMPA and others) are considering different concepts for mm Wave WPAN systems to define the systems which are the best suited for multi-Gbps WPAN applications.

A mmWave communication link is less robust than those at lower frequencies (for example, 2.4GHz and 5GHz bands) due to both oxygen absorption, which attenuates the signal over long range, and its short wavelength, which provides high attenuation through obstructions such as walls and ceilings. As a result, the use of directional antennas (such as a beamforming antenna, a sectorized antenna, or a fixed beam antenna) has been envisioned as useful for 60GHz applications.

Inherent in any wireless communication systems is the need for improved throughput and reliability. Thus, a strong need exists for techniques to improve mm Wave wireless personal area networks.

US 2007/0207730 describes adaptive multi-beamforming systems and methods for communication systems.

US 4,189,733 relates to an adaptive electronically steerable phased array.

N/A: "Unified And Flexible Millimeter Wave Wpan Systems Supported By Common Mode ; 15-07-0761-15-003c-unified-and-flexible-millimeterwave-wpan-systems-supported-by-common-mode", IEEE DRAFT; 15-07-0761-15-003C-UNIFIED-AND-FLEXIBLE-MILLIMETER-WAVE-WPAN-SYSTEMS-SUPPORTED-BY-COMMON-MODE, IEEE-SA MENTOR, PISCATAWAY, NJ USA, vol. 802.153c, no. 15, 13 November 2007 (2007-11-13), pages 1-80, is a presentation relating to unified and flexible millimeter wave WPAN systems supported by common mode.

**BRIEF DESCRIPTION OF THE DRAWINGS**

The present invention may be better understood, and its numerous features and advantages made apparent to those skilled in the art by referencing the accompanying drawings.

FIG. 1 illustrates a system for analog beamforming and tracking according to an embodiment of the present invention.
FIG. 2 illustrates a beam tracking packet diagram with dedicated time allocated in a super-frame.
FIG. 3 illustrates a beam tracking packet diagram according to an example.
FIG. 4 illustrates a performance comparison of beamforming gain for 100 channel realizations between a dedicated training approach and a training approach according to an example.
FIG. 5 illustrates a beam tracking protocol according to an example.
FIG. 6 illustrates an alternative beam tracking protocol according to an embodiment of the present invention.
FIG. 7 illustrates an alternative beam tracking packet diagram according to an example.

The use of the same reference symbols in different drawings indicates similar or identical items.

**DESCRIPTION OF THE EMBODIMENT(S)**

In the following description, numerous specific details are set forth. However, it is understood that embodiments of the invention may be practiced without these specific details. In other instances, well-known methods, structures and techniques have not been shown in detail in order not to obscure an understanding of this description.

References to "one embodiment," "an embodiment," "example embodiment," "various embodiments," and the like, indicate that the embodiment(s) of the invention so described may include a particular feature, structure, or characteristic, but not every embodiment necessarily includes the particular feature, structure, or characteristic. Further, repeated use of the phrase "in one embodiment" does not necessarily refer to the same embodiment, although it may.

As used herein, unless otherwise specified the use of the ordinal adjectives "first," "second," "third," and the like, to describe a common object, merely indicate that different instances of like objects are being referred to, and are not intended to imply that the objects so described must be in a given sequence, either temporally, spatially, in ranking, or in any other manner.

Embodiments of the invention may be used in a variety of applications. Some embodiments of the invention may be used in conjunction with various devices and systems, for example, a transmitter, a receiver, a transceiver, a transmitter-receiver, a wireless communication station, a wireless communication device, a wireless Access Point (AP), a modem, a wireless modem, a Personal Computer (PC), a desktop computer, a mobile computer, a laptop computer, a notebook computer, a tablet computer, a server computer, a handheld computer, a handheld device, a Personal Digital Assistant (PDA) device, a handheld PDA device, or even high definition television signals in a personal area network (PAN).

Although embodiments of the invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulate and/or transform data represented as physical (for example, electronic) quantities within the computer's registers and/or memories into other data similarly represented as physical quantities within the computer's registers and/or memories or other information storage medium that may store instructions to perform operations and/or processes.

Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. For example, "a plurality of stations" may include two or more stations.

According to an embodiment of the present invention, directional communication may be achieved using a novel procedure that may be used with, for example, a phase antenna array system where inputs and outputs to/from antenna elements are multiplied by a weight (phase) vector to form transmit (TX) and receive (RX) beams. Devices with beam steerable antennas require optimal adjustment of TX and RX antenna systems (beamforming/tracking), typically using a dedicated time frame for the beamforming, tracking and adjustment. According to an embodiment of the present invention, the use of a dedicated time for tracking is not used. Further, the quality of the beam-formed transmission may become worse over time due to a non-stationary environment and the novel beam tracking procedure may be used to adjust the TX and RX antenna weight vectors. Antenna training may be performed close to the current beamforming such that antenna weight vectors may be updated using recursive procedures using the current TX and RX antenna weight vectors as initial values.

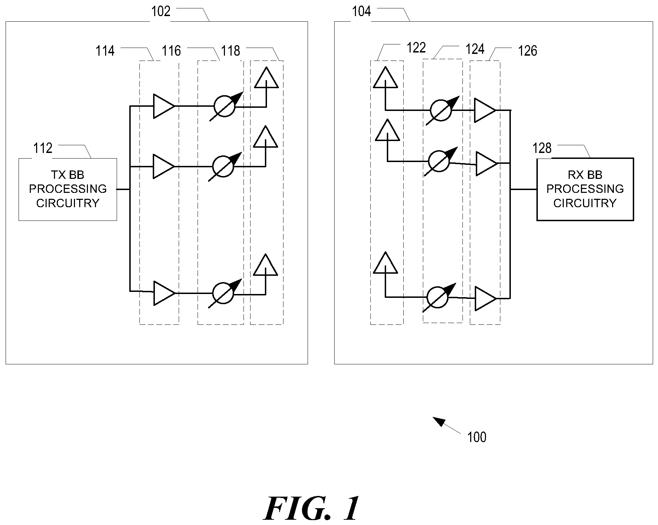

FIG. 1 illustrates a system for analog beamforming and tracking according to an embodiment of the present invention. System 100 may include one or more transmitting devices 102 and/or one or more receiving devices 104. Transmitting device 102 may include a transmit baseband processing circuitry 112, multiple power amplifiers 114, each power amplifier 104 connected to a phase shifter 116 and an antenna 118. Receiving device 104 may include multiple antennas 122, each antenna 122 connected to a phase shifter 124 and a low noise amplifier 126. Low noise amplifiers 126 each are connected to a single receive baseband processing circuitry 128. Although illustrated as separate devices, transmitting device 102 and receiving device 104 may be encompassed in a single component and may share circuitry, for example, antennas and/or phase shifters.

Transmitting device 102 uses a phased array approach to achieve directional transmission. In a phased array approach, transmit beams are formed by changing the phases of the output signals of each antenna element. Transmit power is distributed to multiple power amplifiers 114 and the beam can be adaptively steered. Receiving device 104 also uses a phased array approach to achieve directional reception. Receive beams are detected by changing the phases of the input signal of each antenna element. The receive gain is distributed to the multiple low noise amplifiers 126 and the beam can be adaptively received.

According to an example, transmitting device 102 transmits data signals using a modified version of predetermined TX antenna settings while receiving device 104 performs the processing of the received signals and is able to estimate the needed channel state information from the received signals. The beamforming may be performed during one or several stages where receiving device 104 feeds back the control messages to transmitting device 102, the control messages include information about the parameters needing further training. After all the needed channel state information is obtained, receiving device 104 calculates optimal TX and RX antenna settings. Then the RX antenna weight vector is applied by receiving device 104 and the TX antenna weight vector is sent to transmitting device 102. The TX antenna weight vector is then applied by transmitting device 102.

Alternatively, the RX antenna weight vector may be estimated by receiving device 104 and the channel state information needed for the TX antenna weight vector estimation may be sent to transmitting device 102. The TX antenna weight vector calculation may be performed by transmitting device 102.

It should be noted that all proposed beamforming/tracking methods may provide unquantized TX and RX antenna weight vectors. However, transmitting device 102 and receiving device 104 may have limitations on the continuity of the magnitude and phase of the weight vectors coefficients applied. As such, the quantization of the antenna weight vectors may be near a closest allowable value, for example $\pi/3$ or $\pi/2$. Further, the TX and RX antenna weight vectors may be quantized to reduce the amount of data transferred for antenna weight vectors transmission between stations after they are calculated.

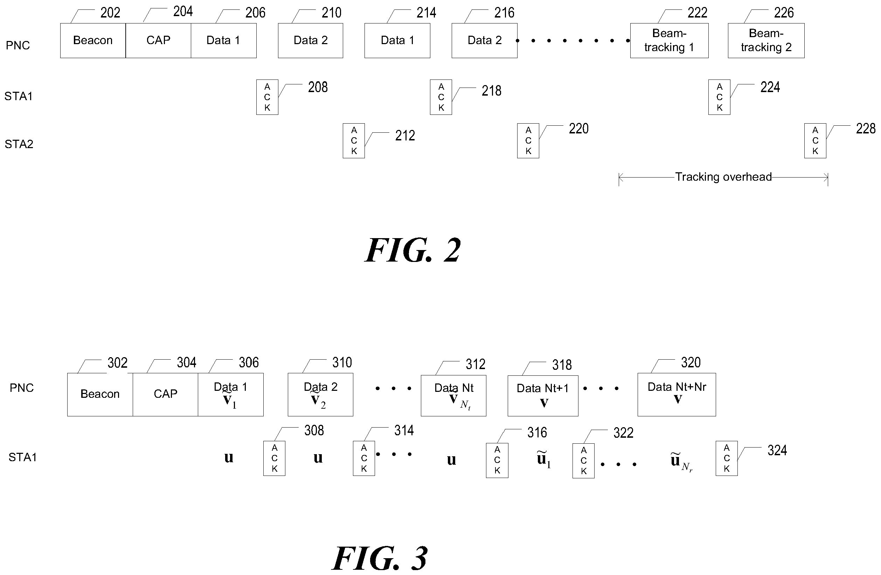

FIG. 2 illustrates a beam tracking packet diagram with dedicated time allocated in a super-frame. In a normal data exchange, a piconet controller (PNC) issues a beacon 202 and a Channel Access Period (CAP) 204, followed by a data packet 206 to station 1 (STA1). Receiving STA1 sends acknowledgement 208 indicating reception of data packet 206. PNC sends a data packet 210 to station 2 (STA2) and receives an ACK 212 from STA2. Additional data packets 214 and 216 may be sent and corresponding ACKs 218 and 220 received. These data transmissions are sent and received using static, previously determined TX and RX weight vectors. As part of a dedicated tracking protocol, PNC sends a beam tracking packet 222 to STA1 and after receiving ACK 224 from STA1, sends beam tracking packet 226 to STA2, and receives ACK 228 from STA2. Beam tracking packets 222 and 226 are formed using training matrices.

As the number of stations increase, the time for a dedicated tracking procedure increases significantly, providing a more inefficient system. Further, frequent beam-tracking may be required to track small changes of the channel. Beam-search and beam-tracking each may take multiple iterations of message exchange. As the number of stations increase, for example, in a dense environment, the time allocated for tracking overhead may be large and thus cause efficiency to drop. Beam-tracking overhead may be as much as 100us per iteration, and may be scheduled very frequently, such as every 1 or 2 ms.

In the training approach illustrated in FIG. 2, transmit (TX) and receive (RX) antenna weight vectors **v** and **u** may be applied to the inputs of the transmit antennas 118 using phase shifters 116 and the outputs of the receive antennas 122 using phase shifters 124, respectively. A mathematical model of the system shown in FIG. 1 can be illustrated by the following equations:

$$\mathbf{y}_1 = \mathbf{u}^H \mathbf{H} \mathbf{F} \mathrm{diag}\{x\} \qquad (1)$$

$$\mathbf{y}_2 = \mathrm{diag}\{z\} \mathbf{G}^H \mathbf{H} \mathbf{v} \qquad (2)$$

where y is the received signal; x is the transmitted symbol; vectors **u** and **v** are the receive and transmit beamforming vectors, respectively and also include quantities for tracking; H is a $N_r$ x $N_t$ frequency non-selective channel transfer matrix; and matrices F and G are training matrices, which can be any full rank matrix. For example, the Hardmard matrix may be used as a training matrix because it is orthogonal and its phase only takes value 0 and $\pi$. The transmitted symbol is a training symbol.

In the approach illustrated in FIG. 2, F or G matrices exist only at one side of transmission. For example, to track and update the transmit beamforming vector **u**, F is used at the transmitter side (see equation 1). On the other hand, to track the receive beamforming vector **v**, G matrix is used at the receiver side (see equation 2). The tracking protocol needs to reserve particular time to transmit with each column of F and receive with each column of G matrix. In addition, a training sequence in time domain is used in each transmission.

According to an example, rather than using dedicated tracking message exchanges as illustrated in FIG. 2, training is distributed into data transmission. According to one embodiment, the dedicated training time that is used to send and receive with F and G is no longer needed. In each transmission, a perturbation on the **v** and **u** vectors is added sequentially for each packet transmission, which only causes a negligible degradation on the beamforming gain. The $N_t$ perturbed transmit beamforming vectors form beamforming matrix is w $\tilde{V} = [\tilde{v}_1 \ \tilde{v}_2 \cdots v_{N_1}] \ \tilde{v}_i$ forming vector. Similarly, the $N_r$ perturbed receive beamforming vectors form beamforming matrix , where is the i-th $\tilde{U} = [\tilde{u}_1 \ \tilde{u}_2 \cdots \tilde{u}_{N_r}]$ vector. $\tilde{u}_i$ $N_r + N_t$ packet transmissions, the two receive vectors are illustrated as:

$$\mathbf{y}_1 = \mathbf{u}^H \mathbf{H} \tilde{\mathbf{V}} \begin{bmatrix} x_1 & & \\ & \ddots & \\ & & x_{N_i} \end{bmatrix} \qquad (3)$$

$$\mathbf{y}_2 = \begin{bmatrix} z_1 & & \\ & \ddots & \\ & & z_{N_r} \end{bmatrix} \tilde{\mathbf{U}}^H \mathbf{H} \mathbf{v} \qquad (4)$$

. where **v** and **u** are the latest beamforming vectors under tracking; $x_i$ and $z_i$ are transmitted symbols; noises are ignored. The transmitted symbol is a data symbol. $\tilde{v}_i$ may be generated by adding a minimum allowed phase rotation to the i-th entry of **v**. For example, if the phase shifter has eight levels of value, then $\theta = \pi/3$ can be added to the phase of the i-th entry of **v**, denoted by $\phi_i$, to generate $\tilde{v}_i$. $\tilde{V}$ is full rank and can be written as

$$\widetilde{\mathbf{V}} = \mathbf{v}\begin{bmatrix} 1 & \cdots & 1 \end{bmatrix} + c\,\mathrm{diag}\!\left(\!\begin{bmatrix} e^{\phi_1 + \theta} & \cdots & e^{\phi_{N_t} + \theta} \end{bmatrix}\!\right)$$

, where $c$ is a constant that depends on $\theta$. The matrix $\widetilde{\mathbf{U}} = [\tilde{\mathbf{u}}_1\ \tilde{\mathbf{u}}_2 \cdots \tilde{\mathbf{u}}_{N_r}]$ can be generated similarly.

It should be noticed that only a single data stream is described. However, the concepts described herein may be applied to multiple data streams.

FIG. 3 illustrates a beam tracking packet diagram according to an example. A piconet controller (PNC) issues a beacon 302 and a CAP 304 (followed by a data packet 306 to station 1 (STA1) using perturbed antenna weight vector $\mathbf{V}_1$ and is receiving by STA1 using antenna weight vector $\mathbf{u}$. Receiving STA1 sends acknowledgement 308 indicating reception of data packet 306. PNC sends additional data packets 310 through 312 using perturbed antenna weight vectors $\tilde{\mathbf{v}}_2$ through $\tilde{\mathbf{v}}_{N_t}$ which are received by STA1 using antenna weight vector $\mathbf{u}$. PNC receives additional ACKs 314 through 316 from STA1. Note that PNC may be sending additional data to other stations (not illustrated). Next, PNC sends data packets 318 through 320 using new antenna weight vector $\mathbf{v}_{new}$ which is received by STA1 using perturbed antenna weight vectors $\tilde{\mathbf{u}}_l$ through $\tilde{\mathbf{u}}_{N_r}$. STA1 sends ACKs 322 through 324.

As illustrated in FIG. 3, a preserved time slot for training is not used. Data packets are transmitted and received with the modified beamforming vector, $\tilde{\mathbf{v}}_i$ and $\tilde{\mathbf{u}}_i$. In this example, PNC and STA 1 conduct beam tracking. The transmit beamforming vector at PNC is tracked before the receive beamforming vector at STA1 is tracked.

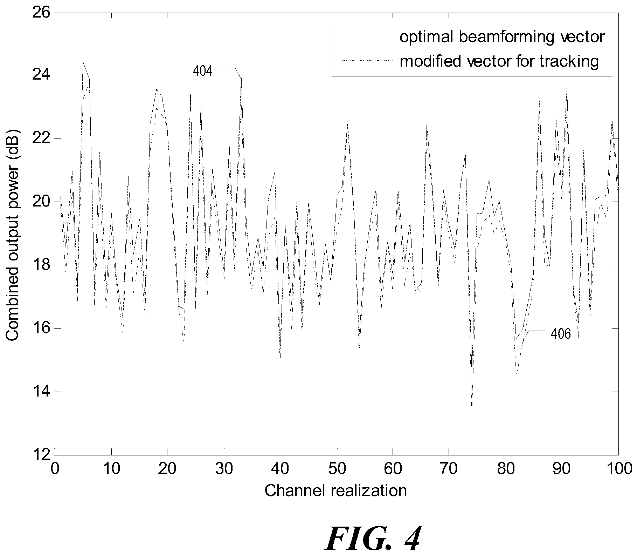

FIG. 4 illustrates a performance comparison of beamforming gain for 100 channel realizations between an iterative training approach and a training approach according to an example. S Graph 404 illustrates channel realization results using an optimal beamforming vector, for example, using the protocol as illustrated in FIG. 2. Graph 406 illustrates channel realization results using a modified vector for tracking, for example, using the protocol as illustrated in FIG. 3. The performance difference using perturbed training matrices $\tilde{\mathbf{v}}_i$ and $\tilde{\mathbf{u}}_i$ instead of the optimal training matrices $\mathbf{v}$ and $\mathbf{u}$ is less than 0.2 dB.

An iterative training protocol excites each column of $\mathbf{F}$ and $\mathbf{G}$ that are full rank in a dedicated training slot to update the beamforming vector, reducing efficiency. According to an embodiment of the present invention, the transmitter and receiver use $\widetilde{\mathbf{V}} = [\tilde{\mathbf{v}}_1\ \tilde{\mathbf{v}}_2 \cdots \tilde{\mathbf{v}}_{N_t}]$ and $\widetilde{\mathbf{U}} = [\tilde{\mathbf{u}}_1\ \tilde{\mathbf{u}}_2 \cdots \tilde{\mathbf{u}}_{N_r}]$ for data transmission and reception respectively, which is also full rank matrix, resulting in a more efficient system. The full rank feature captures the beamforming variation in all directions.

Using equations (3) and (4) and an update method, the beamforming vector can be updated as

$$\mathbf{v}_{new} = \mathrm{norm}\!\left(\mathbf{H}^H \mathbf{u}\right) = \mathrm{norm}\!\left(\mathbf{y}_1 \mathbf{\Lambda}_x \widetilde{\mathbf{V}}^{-1}\right)^H = \mathrm{norm}\!\left(\widetilde{\mathbf{V}}^{-H} \mathbf{\Lambda}_x^H \mathbf{y}_1^H\right) \tag{5}$$

$$\mathbf{u} = \mathrm{norm}\!\left(\mathbf{H}\mathbf{v}_{new}\right) = \mathrm{norm}\!\left(\widetilde{\mathbf{U}}^{-H} \mathbf{\Lambda}_z \mathbf{y}_2\right) \tag{6}$$

where

$$\mathbf{\Lambda}_x = \begin{bmatrix} x_1^{-1} & & \\ & \ddots & \\ & & x_{N_t}^{-1} \end{bmatrix}, \quad \mathbf{\Lambda}_z = \begin{bmatrix} z_1^{-1} & & \\ & \ddots & \\ & & z_{N_t}^{-1} \end{bmatrix},$$

and

$$\mathrm{norm}(\mathbf{a}) = \frac{\mathbf{a}}{\|\mathbf{a}\|}.$$

After the transmit beamforming vector is updated to $\mathbf{v}_{new}$, $\mathbf{v}_{new}$ is used for the update of the receive beamforming vector. The inversion may be performed with low complexity as follows. The equation may be converted to find the inversion of a rank-one update. Because only the i-th element of $\mathbf{v}$ is modified to get $\tilde{\mathbf{v}}_i$, we have $\widetilde{\mathbf{V}} = [\mathbf{v}\ \mathbf{v} \cdots \mathbf{v}] + \mathrm{diag}(\cdot)$, where $\mathrm{diag}(\cdot)$ is a diagonal matrix.

$$\begin{aligned}
\tilde{\mathbf{V}} &= [\mathbf{v} \quad \mathbf{v} \quad \cdots \quad \mathbf{v}] + \mathrm{diag}(\cdot) \\
&= \mathbf{v}[1 \quad 1 \quad \cdots \quad 1] + \mathrm{diag}(\cdot) \\
&= \{\mathbf{v}\underbrace{[1 \quad 1 \quad \cdots \quad 1]\mathrm{diag}^{-1}(\cdot)}_{\mathbf{b}^H} + \mathbf{I}\}\mathrm{diag}(\cdot) \\
&= (\mathbf{v}\mathbf{b}^H + \mathbf{I})\mathrm{diag}(\cdot)
\end{aligned}$$

where $\mathbf{b} = ([1 \; 1 \; \cdots \; 1]\mathrm{diag}^{-1}(\cdot))^H$. The inversions of the two terms of $\tilde{\mathbf{V}}$ can be computed. The inversion of the first term is $(\mathbf{I} + \mathbf{v}\mathbf{b}^H)^{-1} = \mathbf{I} - (1 + \mathbf{b}^H\mathbf{v})^{-1}\mathbf{v}\mathbf{b}^H$ and the inversion of the second term is the inversion of each diagonal entry. Therefore, only $N_t + 1$ scalar divisions are required to obtain $\tilde{\mathbf{V}}^{-1}$ Decision feedback can be used when the data packet is correctly received, where $x_i$ and $z_i$ in equations (3) and (4) are data symbols. The tracking accuracy can be greatly improved by decision feedback due to the dense population of data symbols.

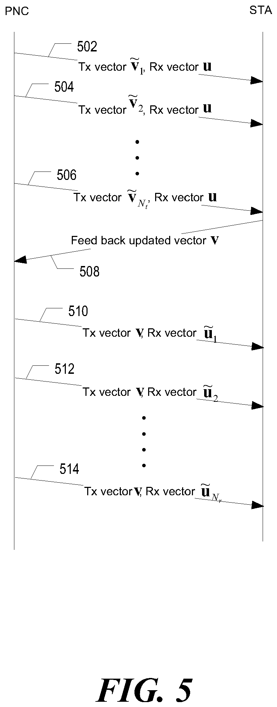

FIG. 5 illustrates a beam tracking protocol according to an example where channel reciprocal is not assumed. A piconet controller (PNC) transmits a data packet 502, using a perturbed transmit antenna weight vector and is received by as $\tilde{\mathbf{v}}_1$ on, using the optimal receive antenna weight vector $\mathbf{u}$. Further data packets 504 through 506, are transmitted using perturbed by transmit antenna weight vectors $\tilde{\mathbf{v}}_2$ through $\tilde{\mathbf{v}}_{N_t}$ respectively. STA calculate the updated transmit vector $\mathbf{v}$ and transmits the updated vector $\mathbf{v}$ in transmission 508 to PNC. PNC transfers $N_r$ data packets, 510 and 512 through 514. Data packets 510 and 512 through 514 are sent with the updated vector $\mathbf{v}$ by PNC, and received with receive antenna weight vectors $\tilde{\mathbf{u}}_1$ and $\tilde{\mathbf{u}}_2$ through $\tilde{\mathbf{u}}_{N_r}$. The tracking is performed during the data transmission stage. Only the transmission from a piconet controller (PNC) to a station (STA) shown. The acknowledge (ACK) transmission from STA to PNC does not participate the tracking, and is not shown. The ACK may be transmitted following the ACK policy for immediate ACK, delayed ACK or block ACK. The feedback of $\tilde{\mathbf{v}}_{new}$ from STA to PNC can also be piggybacked with ACK or other uplink traffic.

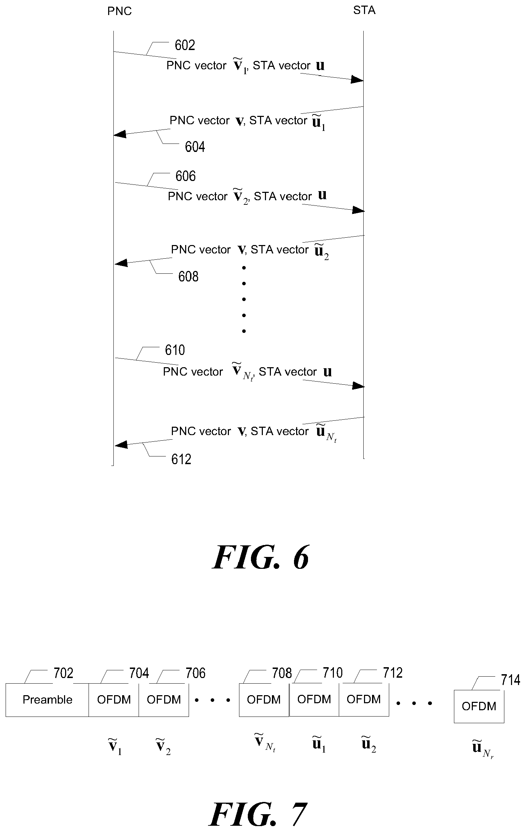

FIG. 6 illustrates an alternative beam tracking protocol according to an embodiment of the present invention where a channel reciprocal is assumed. A piconet controller (PNC) transmits a data packet 602 with perturbed antenna weight $\tilde{\mathbf{v}}_1$ which is received by a station (STA) with antenna weight vector $\mathbf{u}$. STA transmits a data packet 604 with perturbed antenna weight vector $\tilde{\mathbf{u}}_1$ which is received by PNC with antenna weight vector $\mathbf{v}$. The process is repeated, PNC transmits a data packet 606 with perturbed antenna weight $\tilde{\mathbf{v}}_2$ which is received by STA with antenna weight vector $\mathbf{u}$. STA transmits a data packet 608 with perturbed antenna weight vector $\tilde{\mathbf{u}}_2$ which is received by PNC with antenna weight vector V. The process is repeated multiple times, until PNC transmits a data packet 610 with perturbed antenna weight $\tilde{\mathbf{v}}_{N_r}$ which is received by STA with antenna weight vector $\mathbf{v}$. STA transmits a data packet 612 with perturbed antenna weight vector $\tilde{\mathbf{u}}_{N_r}$ which is received by PNC with antenna weight vector $\mathbf{v}$. For implicit feedback beamforming, where the channel reciprocal is assumed, both the downlink and uplink transmissions are used to track the beamforming vectors at PNC and STA. The receive beamforming vector in one direction is used as the transit beamforming vector for the other direction.

Because the illustrated schemes take about $N_t + N_r$ packets, albeit without an interruption in data transmission, the channel may vary if the packet duration is long. In an alternate embodiment, partial tracking may be implemented. Namely, the transmitter and receiver can update their beamforming weights within a subspace. Instead of $N_t$ and $N_r$, we track changes within only $\breve{N}_t$ and $\breve{N}_r$ transmit and receive vector space respectively. The perturbed $\breve{N}_t$ transmit beamforming vectors forms beamforming matrix $\breve{\mathbf{V}} = [\breve{\mathbf{v}}_1 \quad \breve{\mathbf{v}}_2 \quad \cdots \quad \breve{\mathbf{v}}_{\breve{N}_t}]$, where $\breve{\mathbf{V}}_i$ is the i-the perturbed beamforming vector (and $\breve{\mathbf{v}}_i = \tilde{\mathbf{v}}_i$). Similarly, the $\breve{N}_r$ perturbed receive beamforming vectors forms beamforming matrix $\breve{\mathbf{U}} = [\breve{\mathbf{u}}_1 \quad \breve{\mathbf{u}}_2 \quad \cdots \quad \breve{\mathbf{u}}_{\breve{N}_r}]$, where $\mathbf{u}_i$ is the i-the perturbed vector (and $\breve{\mathbf{u}}_i = \tilde{\mathbf{u}}_i$). After $\breve{N}_r + \breve{N}_t$ packet transmissions, we will have two receive vectors

$$\breve{\mathbf{y}}_1 = \mathbf{u}^H \mathbf{H} \breve{\mathbf{V}} \begin{bmatrix} x_1 & & \\ & \ddots & \\ & & x_{\breve{N}_t} \end{bmatrix} \qquad (7)$$

$$\breve{\mathbf{y}}_2 = \begin{bmatrix} z_1 & & \\ & \ddots & \\ & & z_{\breve{N}_r} \end{bmatrix} \breve{\mathbf{U}}^H \mathbf{H} \mathbf{v} \tag{8}$$

where **v** and **u** are the latest beamforming vectors under tracking; $x_i$ and $z_i$ are transmitted symbols; noises are ignored. The transmitted symbol is a data symbol. Equations (7) and (8) may be simplified by removing the effect of training symbols as

$$\mathbf{q}_1 = \breve{\mathbf{y}}_1 \mathbf{\Lambda}_x = \mathbf{u}^H \mathbf{H} \breve{\mathbf{V}} \tag{9}$$

$$\mathbf{q}_2 = \mathbf{\Lambda}_z \breve{\mathbf{y}}_2 = \breve{\mathbf{U}}^H \mathbf{H} \mathbf{v} \tag{10}$$

where

$$\mathbf{\Lambda}_x = \begin{bmatrix} x_1^{-1} & & \\ & \ddots & \\ & & x_{\breve{N}_r}^{-1} \end{bmatrix} \text{ and } \mathbf{\Lambda}_z = \begin{bmatrix} z_1^{-1} & & \\ & \ddots & \\ & & z_{\breve{N}_r}^{-1} \end{bmatrix}.$$

the transmit sector may be computed within the subspace spanned by the columns of $\tilde{V}$ as

$$\tilde{\mathbf{v}}_{new} = \mathrm{norm}\left(\left(\breve{\mathbf{V}}^H\right)^+ \mathbf{q}_1^H\right) \tag{11}$$

where

$$\mathbf{A}^+ = \begin{cases} \mathbf{A}^H \left(\mathbf{A}\mathbf{A}^H\right)^{-1}, & \text{number of columns} \ge \text{number of rows} \\ \left(\mathbf{A}^H \mathbf{A}\right)^{-1} \mathbf{A}^H, & \text{otherwise} \end{cases}$$

is the pseudo inverse of **A**, Similarly, the receive vector within the subspace. spanned by the columns of $\tilde{U}$ is computed by

$$\breve{\mathbf{y}}_2 = \begin{bmatrix} z_1 & & \\ & \ddots & \\ & & z_{\breve{N}_r} \end{bmatrix} \breve{\mathbf{U}}^H \mathbf{H} \tilde{\mathbf{v}}_{new} \tag{12}$$

$$\mathbf{q}_2 = \mathbf{\Lambda}_z \mathbf{y}_2 \tag{13}$$

$$\tilde{\mathbf{u}}_{new} = \mathrm{norm}\left(\left(\tilde{\mathbf{U}}^H\right)^+ \mathbf{q}_2\right) \tag{14}$$

After the transmit beamforming vector is updated to $\mathbf{v}_{new}$, $\mathbf{v}_{new}$ is used for the update of the receive beamforming vector. The pseudo inversion can be done with low complexity.

FIG. 7 illustrates another alternative beam tracking packet diagram according to an example. Because a random phase may be introduced during TX and RX switches, a tracking sequence may occur within one data packet. Different perturbed phase vectors may be applied to several OFDM symbols. As illustrated a preamble 702 is transmitted. The decoding of OFDM symbols will use the channel estimation in preamble 702. OFDM symbols 704 and 706 through 708 are transmitted with perturbed weight vectors $\tilde{\mathbf{v}}_1$ any $\tilde{\mathbf{v}}_2$ through $\tilde{\mathbf{v}}_{Nt}$. OFDM symbols 710 and 712 through 714 are transmitted with the new updated $\mathbf{v}_{new}$ and received with perturbed weight vectors $\tilde{\mathbf{u}}_1$ and $\tilde{\mathbf{u}}_2$ through $\tilde{\mathbf{u}}_{Nr}$. Slight performance loss may occur to the data symbol. The decoded information can be used for a decision directed channel estimation, which will be used for beam vector update. To get accurate estimation of $\tilde{\mathbf{V}}= [\tilde{\mathbf{v}}_1 \; \tilde{\mathbf{v}}_2 \cdots \tilde{\mathbf{v}}_{Nt}]$ and $\tilde{\mathbf{U}} = [\tilde{\mathbf{u}}_1 \; \tilde{\mathbf{u}}_2 \cdots \tilde{\mathbf{u}}_{Nr}]$, several OFDM symbols will use the same phase vector, and the estimation will be average across frequency and time.

When using a small number of antennas in a phased array, for example, four antennas, changing the phase shift in one out of four results in an antenna pattern that may fail to provide the required antenna gain. According to an embodiment of the present invention, several alternatives may be used to improve the gain. Beam tracking may be replaced by one iteration of the beam search. Because the number of antennas is small and the initial beamforming vector is close to the optimum, the training time is short. Alternatively, because the number of antennas is small, only a small portion of the data symbols of the packet are used for the beamforming tracking and beamformed by the perturbed beamforming vectors. The rest of the symbols may be sent (or received) with the unperturbed beamforming vector, that is, the optimum vector. A lower modulation coding scheme (MCS) may be applied to the data symbols sent by the perturbed beamforming vectors, and a higher MCS may be used for the unperturbed portion. Therefore the loss from the tracking is minimized. Both mechanisms may also be used for a collection of sectorized antennas. For the case of sectorized antennas, the tracking may be conducted on a selected subset of the antennas for overhead reduction.

The techniques described above may be embodied in a computer-readable medium for configuring a computing system to execute the method. The computer readable media may include, for example and without limitation, any number of the following: magnetic storage media including disk and tape storage media; optical storage media such as compact disk media (e.g., CD-ROM, CD-R, etc.) and digital video disk storage media; holographic memory; nonvolatile memory storage media including semiconductor-based memory units such as FLASH memory, EEPROM, EPROM, ROM; ferromagnetic digital memories; volatile storage media including registers, buffers or caches, main memory, RAM, etc.; and data transmission media including permanent and intermittent computer networks, point-to-point telecommunication equipment, carrier wave transmission media, the Internet, just to name a few. Other new and various types of computer-readable media may be used to store and/or transmit the software modules discussed herein. Computing systems may be found in many forms including but not limited to mainframes, minicomputers, servers, workstations, personal computers, notepads, personal digital assistants, various wireless devices and embedded systems, just to name a few. A typical computing system includes at least one processing unit, associated memory and a number of input/output (I/O) devices. A computing system processes information according to a program and produces resultant output information via I/O devices.

Realizations in accordance with the present invention have been described in the context of particular embodiments. These embodiments are meant to be illustrative and not limiting. Many variations, modifications, additions, and improvements are possible. Accordingly, plural instances may be provided for components described herein as a single instance. Boundaries between various components, operations and data stores are somewhat arbitrary, and particular operations are illustrated in the context of specific illustrative configurations. Other allocations of functionality are envisioned and may fall within the scope of claims that follow. Finally, structures and functionality presented as discrete components in the various configurations may be implemented as a combined structure or component. These and other variations, modifications, additions, and improvements may fall within the scope of the invention as defined in the claims that follow.

**Claims**

**1.** A method comprising:

performing beam tracking during an exchange of data packets;

at a first device (102), transmitting, to a second device (104), a first data packet (602) with a modified first antenna weight vector, the modified first antenna weight vector comprising a previously generated first antenna weight vector with an added perturbation;
at the second device (104), receiving, from the first device (102), the first data packet (602) with a previously generated second antenna weight vector;

**characterized by**:

at the second device (104), transmitting, to the first device (102), a second data packet (604) with a modified second antenna weight vector, the modified second antenna weight vector comprising the previously generated second antenna weight vector with an added perturbation; and

at the first device (102), receiving, from the second device (104), the second data packet (604) with the previously generated first antenna weight vector.

2. The method of claim 1, wherein the perturbation is a minimum allowed phase rotation.

3. The method of claim 1, wherein the perturbation is an integer multiple of a minimum allowed phase rotation.

4. The method of claim 1, further comprising a plurality of iterations of said transmitting a first data packet and receiving a second data packet.

5. The method of claim 4, further comprising generating a new first antenna weight vector based on the plurality of iterations.

6. The method of claim 1, wherein partial tracking is implemented such that beam tracking is updated only within a subspace.

7. A system comprising a first device (102) and a second device (104), each comprising processing circuitry (112, 128) adapted to implement a method as claimed in any of claims 1-6.


**Patentansprüche**

1. Verfahren, umfassend:

Durchführen einer Strahlverfolgung während eines Austauschs von Datenpaketen;
an einer ersten Einrichtung (102), Senden, zu einer zweiten Einrichtung (104), eines ersten Datenpakets (602) mit einem modifizierten ersten Antennengewichtsvektor, wobei der modifizierte erste Antennengewichtsvektor einen zuvor erzeugten ersten Antennengewichtsvektor mit einer hinzugefügten Perturbation umfasst;
an der zweiten Einrichtung (104), Empfangen, von der ersten Einrichtung (102), des ersten Datenpakets (602) mit einem zuvor erzeugten zweiten Antennengewichtsvektor;

durch Folgendes gekennzeichnet:

an der zweiten Einrichtung (104), Senden, zur ersten Einrichtung (102), eines zweiten Datenpakets (604) mit einem modifizierten zweiten Antennengewichtsvektor, wobei der modifizierte zweite Antennengewichtsvektor den zuvor erzeugten zweiten Antennengewichtsvektor mit einer hinzugefügten Perturbation umfasst; und
an der ersten Einrichtung (102), Empfangen, von der zweiten Einrichtung (104), des zweiten Datenpakets (604) mit dem zuvor erzeugten ersten Antennengewichtsvektor.

2. Verfahren nach Anspruch 1, wobei die Perturbation eine minimale zulässige Phasendrehung ist.

3. Verfahren nach Anspruch 1, wobei die Perturbation ein ganzzahliges Vielfaches einer minimalen zulässigen Phasendrehung ist.

4. Verfahren nach Anspruch 1, das ferner mehrere Iterationen des Sendens eines ersten Datenpakets und des Empfangens eines zweiten Datenpakets umfasst.

5. Verfahren nach Anspruch 4, das ferner Erzeugen eines neuen ersten Antennengewichtsvektors basierend auf den mehreren Iterationen umfasst.

6. Verfahren nach Anspruch 1, wobei eine partielle Verfolgung implementiert wird, so dass die Strahlverfolgung nur innerhalb eines Unterraums aktualisiert wird.

7. System, das eine erste Einrichtung (102) und eine zweite Einrichtung (104) umfasst, die jeweils Verarbeitungsschaltkreise (112, 128) umfassen, die zum Implementieren eines Verfahrens nach einem der Ansprüche 1-6 ausgelegt sind.

**Revendications**

1. Procédé, comprenant :

   la réalisation de suivi de faisceau durant un échange de paquets de données ;
   à un premier dispositif (102), la transmission, à un second dispositif (104), d'un premier paquet de données (602) avec un premier vecteur de poids d'antenne modifié, le premier vecteur de poids d'antenne modifié comprenant un premier vecteur de poids d'antenne généré auparavant avec une perturbation additionnelle ;
   au second dispositif (104), la réception, à partir du premier dispositif (102), du premier paquet de données (602) avec un second vecteur de poids d'antenne généré auparavant ;

   **caractérisé par** :

   au second dispositif (104), la transmission, au premier dispositif (102), d'un second paquet de données (604) avec un second vecteur de poids d'antenne modifié, le second vecteur de poids d'antenne modifié comprenant le second vecteur de poids d'antenne généré auparavant avec une perturbation additionnelle ; et
   au premier dispositif (102), la réception, à partir du second dispositif (104), du second paquet de données (604) avec le premier vecteur de poids d'antenne généré auparavant.

2. Procédé selon la revendication 1, dans lequel la perturbation est une rotation de phase permise minimum.

3. Procédé selon la revendication 1, dans lequel la perturbation est un multiple de nombre entier relatif d'une rotation de phase permise minimum.

4. Procédé selon la revendication 1, comprenant en outre une pluralité d'itérations de ladite transmission d'un premier paquet de données et de la réception d'un second paquet de données.

5. Procédé selon la revendication 4, comprenant en outre la génération d'un nouveau premier vecteur de poids d'antenne en fonction de la pluralité d'itérations.

6. Procédé selon la revendication 1, dans lequel un suivi partiel est réalisé de telle sorte que le suivi de faisceau soit actualisé seulement à l'intérieur d'un sous-espace.

7. Système comprenant un premier dispositif (102) et un second dispositif (104), chacun comprenant une circuiterie de traitement (112, 128) adaptée pour réaliser un procédé selon l'une quelconque des revendications 1 à 6.

*FIG. 1*

PNC

| Beacon 202 | CAP 204 | Data 1 206 | Data 2 210 | Data 1 214 | Data 2 216 | ... | Beam-tracking 1 222 | Beam-tracking 2 226 |

STA1

ACK 224

STA2

ACK 208   ACK 212   ACK 218   ACK 220   ACK 228

Tracking overhead

*FIG. 2*

PNC

| Beacon 302 | CAP 304 | Data 1 $\mathbf{V}_1$ 306 | Data 2 $\mathbf{V}_2$ 310 | Data Nt $\mathbf{V}_{N_t}$ 312 | Data Nt+1 $\mathbf{V}$ 318 | Data Nt+Nr $\mathbf{V}$ 320 |

STA1

ACK 308   ACK 314   ACK 316   ACK 322   ACK 324

$\mathbf{u}$ 306   $\mathbf{u}$ 310   $\mathbf{u}$ 312   $\widetilde{\mathbf{u}}_1$ 316   $\widetilde{\mathbf{u}}_{N_r}$ 322

*FIG. 3*

12

FIG. 4

PNC                                          STA

502

Tx vector $\widetilde{\mathbf{V}}_1$, Rx vector $\mathbf{u}$

504

Tx vector $\widetilde{\mathbf{V}}_2$, Rx vector $\mathbf{u}$

•
•
•

506

Tx vector $\widetilde{\mathbf{V}}_{N_t}$, Rx vector $\mathbf{u}$

Feed back updated vector $\mathbf{V}$

508

510

Tx vector $\mathbf{V}$, Rx vector $\widetilde{\mathbf{u}}_1$

512

Tx vector $\mathbf{V}$, Rx vector $\widetilde{\mathbf{u}}_2$

•
•
•
•

514

Tx vector $\mathbf{V}$, Rx vector $\widetilde{\mathbf{u}}_{N_r}$

# FIG. 5

PNC                                    STA

602

PNC vector $\widetilde{\mathbf{V}}_1$, STA vector $\mathbf{u}$

PNC vector $\mathbf{V}$, STA vector $\widetilde{\mathbf{u}}_1$

604

606

PNC vector $\widetilde{\mathbf{V}}_2$, STA vector $\mathbf{u}$

PNC vector $\mathbf{V}$, STA vector $\widetilde{\mathbf{u}}_2$

608

•
•
•
•
•

610

PNC vector $\widetilde{\mathbf{V}}_{N_t}$, STA vector $\mathbf{u}$

PNC vector $\mathbf{V}$, STA vector $\widetilde{\mathbf{u}}_{N_t}$

612

*FIG. 6*

| 702 | 704 | 706 | | 708 | 710 | 712 | | 714 |
|-----|-----|-----|-----|-----|-----|-----|-----|-----|
| Preamble | OFDM | OFDM | • • • | OFDM | OFDM | OFDM | • • • | OFDM |

$\widetilde{\mathbf{v}}_1$    $\widetilde{\mathbf{v}}_2$    $\widetilde{\mathbf{v}}_{N_t}$    $\widetilde{\mathbf{u}}_1$    $\widetilde{\mathbf{u}}_2$    $\widetilde{\mathbf{u}}_{N_r}$

*FIG. 7*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070207730 A
- US 4189733 A

**Non-patent literature cited in the description**

- Unified And Flexible Millimeter Wave Wpan Systems Supported By Common Mode ; 15-07-0761-15-003c-unified-and-flexible-millimeterwave-wpan-systems-supported-by-common-mode. *IEEE DRAFT,* 13 November 2007, vol. 802 (15), 1-80